Europäisches Patentamt

(19) European Patent Office

Office européen des brevets

(11) Publication number: **0 130 026**
**B1**

(12) **EUROPEAN PATENT SPECIFICATION**

(45) Date of publication of patent specification: 02.05.90

(51) Int. Cl.⁵: **G 11 B 7/24, G 11 B 7/00**

(21) Application number: 84304089.0

(22) Date of filing: 18.06.84

(54) **High contrast thin film optical recording medium.**

(30) Priority: 27.06.83 US 508498
06.02.84 US 577069

(43) Date of publication of application:
02.01.85 Bulletin 85/01

(45) Publication of the grant of the patent:
02.05.90 Bulletin 90/18

(84) Designated Contracting States:
AT BE CH DE FR GB IT LI LU NL SE

(56) References cited:
EP-A-0 005 316
EP-A-0 015 141
EP-A-0 042 307
EP-A-0 051 281
DE-A-3 142 532
GB-A-2 055 218
US-A-4 069 487
US-A-4 305 081
US-A-4 336 545
US-A-4 353 767

(73) Proprietor: **OPTICAL DISC CORPORATION**
**17517 H Fabrica Way**
**Cerritos California 90701 (US)**

(72) Inventor: **Wilkinson, Richard L.**
**21341 Avenida Manantial**
**El Toro California 92630 (US)**
Inventor: **Winslow, John S.**
**4380 Canyon Crest Road**
**Altadena California 91001 (US)**

(74) Representative: **Wombwell, Francis et al**
**Potts, Kerr & Co. 15, Hamilton Square**
**Birkenhead Merseyside L41 6BR (GB)**

(56) References cited:

Patent Abstracts of Japan vol. 7, no. 78, 31
March 1983 & JP-A-58-9230
IEEE J. of Quantum Electronics, Vol. QE-14, No.
7, pp. 487-495

Courier Press, Leamington Spa, England.

## Description

Technical field

This invention relates generally to the field of direct-read-after-write (DRAW) information recording media. More particularly, the subject invention relates to a phase contrast ablative recording medium having improved contrast characteristics and a reduced film thickness. The medium has sufficient background reflectivity and contrast to be playable on a standard laser videodisc player and is in accordance with the International Electrotechnical Commission standard for videodiscs.

Description of the prior art

Many systems and methods are known for optically recording information on moving media. For example, U.S. Patent No. 4,225,873 describes the recording of video and audio information in a spiral track on a flat disc shaped medium commonly referred to as a videodisc. Similar systems are known for encoding digitalized audio signals on a similar medium known as a digital audio disc. Such systems are commonly used for recording entertainment material for reproduction in the home. Accordingly, such systems are specifically designed to allow for mass replication of the media on a very large scale such as by injection molding.

According to the known processes, the information is caused to modulate the intensity of a laser beam. This modulated beam is directed onto a master disc having a layer of a light sensitive material such as an "AZ" type photoresist. The modulated beam selectively exposes the light sensitive material. The exposed master disc is subsequently developed to remove portions of the light sensitive material to form surface discontinuities on the disc which represent the information. This master disc is subsequently processed to prepare a metallic stamper for use in an injection molding process. The molded replicas are transparent and are subsequently metallized to achieve the reflection required for reproduction of the recorded information on standard videodisc or digital audio disc players using a focused low intensity beam of laser light. The reflective surface includes surface discontinuities which scatter the reading beam or produce substractive phase interference and modulate the reflected beam.

Due to the relatively high information density and durability of the known optical storage media they are well suited for the storage of many types of information other than entertainment material. For example, one side of a standard videodisc is capable of storing thirty minutes of video information or the amount of digital information contained in ninety standard computer tapes.

Standard videodisc players are relatively inexpensive and can easily be adapted to reproduce digital, video, or compressed audio information.

However, the only methods presently available for producing discs with information which is readable by a standard videodisc player all include the time consuming steps of recording a master matrix, producing a metallic stamper, injection molding replicas, and metallizing the replicas. These processes involve not only considerable time, but also require extremely expensive equipment. The time and equipment costs are tolerable when a large number of replicas are required, but are totally prohibitive for single copy applications.

Other optical recording systems are known for recording single copies of information without the need for producing a metal stamper and injection molding the single copy. The majority of these systems are Direct Read After Write (DRAW) systems which allow the immediate reading of the written information without any intermediate processing. However, prior art DRAW systems have not been capable of producing discs playable on standard videodisc or digital audio disc players.

Standard videodiscs carry video and audio information encoded as an FM signal. This signal is represented on the disc as a spiral track formed of areas of low reflectivity surrounded by a planar background of high reflectivity. The length and spacing of these areas correspond to the periods of individual FM cycles.

In the injection molded discs, the areas of low reflectivity are pits molded in the inner surface of the substrate. After molding, the inner surface is coated with a highly reflective aluminum layer so that the flat background acts like a plane mirror, whereas the pits, seen through the disc, appear to be reflective bumps. The bumps may scatter the incoming reading beam so that only a relatively small percentage of the reading beam is reflected back along the path of the incident light beam, or, alternatively, the top of the bumps may be spaced from the background by a distance chosen to cause subtractive interference between light reflected from the top of the bump and light reflected from the background. The information storage density of the system is determined by the minimum length of the bumps and the minimum spacing between the bumps which can be recognized by the incident light beam. The signal to noise ratio of the reproduced signal is strongly dependent upon the carrier to noise ratio of the signal recovered from the disc which is in turn dependent upon the difference between the amounts of light reflected back along the incident path by a flat portion of the disc and by a bump.

In order to assure compatibility bjyween players and mass produced videodiscs, a disc standard has been established by the International Electrotechnical Commission (IEC). Among other physical requirements, the IEC standard requires that the disc background be 80%±5% reflective.

Prior art DRAW discs have been incapable of satisfying the IEC standard because of low background reflectivity: they either exhibit bright areas on a dark background or dark areas on a background of intermediate reflectivity. The low background reflectivity of the prior art DRAW discs has required the use of higher powered lasers and higher quality optics than those used in videodisc players.

EP—A—0 042 307 discloses a disc comprising a heat-deformable recording layer separated from a substrate by a barrier layer consisting of a watersoluble polymer.

GB—A—2 055 218 describes a disc comprising a recording layer between a reflective layer and a substrate. The recording layer comprises a dye dispersed in a polymer.

US—A—4 069 487 discloses a similar disc structure where the preferred recording materials are chalcogen compounds.

A representative prior art DRAW medium is disclosed in U.S. Patent No. 4,305,081. The medium of this patent includes a substrate coated with a reflective layer such as aluminum, which in turn is coated with a thermal recording material. The recording material is absorptive of the wavelength of light used for writing, such that the writing beam causes localized heating of the recording layer. This heating causes the formation of a hole through the recording layer where it is heated above a certain threshold temperature. These craters expose the reflective layer below the absorbing layer and are therefore relatively reflective of bright compared to the background areas where no holes are formed. However, due to the absorptive nature of the background, discs made in accordance with the teaching of this reference are not playable on a standard videodisc player.

It is important to note that the recording efficiency of the medium requires a relatively high absorption of the recording light beam within the layer, whereas the reading efficiency of the medium requires a relatively high transmissivity of the reading light beam through the layer. Most of the variation among different DRAW media relate to various attempts to optimize the writing efficiency without overly sacrificing the reading efficiency.

U.S. Patent No. 4,176,277 discloses a system in which a hole is made through a thermodegradable film in contact with a light-absorptive metal layer by heating the layer with a focused laser beam. While in theory such a medium provides very high writing efficiency, the reading reflectivity is lower than desired and the debris created while writing tends to reduce writing efficiency by forming light absorbing clouds and depositing a light absorbing film over the objective lens. Furthermore, this debris is scattered over the surface of the disc and makes random variations in the reflected signal which lowers the carrier to noise ratio.

In one embodiment described in this prior patent, the metallic layer is placed over the thermally responsive layer, and portions of the metallic layer are blown away by localized heating of the thermally responsive lower layer. However, the debris problems with such a system are even worse than the debris problems of the previously discussed medium.

A great many ablative optical recording media have been proposed, with various advantages alleged for each. However, each medium has certain drawbacks, and the selection of a medium always involves compromise. Metallic layers are relatively efficient in absorbing light in extremely thin layers but require relatively high temperatures to melt or vaporize. Organic dyes decompose at a relatively low temperature, but their relatively low absorption of light requires far thicker layers than metals. The thicker the layer, the more material displaced in the ablating of each indicia or bit of information. The debris generated by the ablation of this material may collect on the recording lens, or fall into previously ablated areas, thereby reducing optical contrast and greatly lowering the signal-to-noise ratio of the medium.

Materials such as nitrocellulose which decompose to form noncondensing gases partially eliminate the debris problem, but these materials are essentially transparent to visible light and therefore require a light absorbing metal layer or the addition of an organic dye to be usable. If the metal layer is removed by the decomposition of the organic material as described in U.S. Patent No. 4,345,261 to Wilkinson, the metal fragments create debris. Likewise, any dye added to the material will not decompose completely and will also cause debris.

In order to minimize the debris to an acceptable level, it is desirable to minimize the thickness of the recording layer to thereby minimize the amount of material involved in ablating each indicia. If the layer consists of a transparent binder and a light absorbing dye, it is also desirable to use a dye which is exceptionally absorptive of light of the writing wavelength so that only a small proportion of dye is required.

The minimum thickness for the recording layer is often defined by the required writing efficiency or the required reading contrast for the medium.

The article "Antireflection Structures for Optical Recording" by Alan Bell and Fred Spong, as published in the *Journal of Quantum Electronics*, Volume, QE-14, No. 7, July 1978, describes a technique for optimizing the thickness of various types of recording films for maximizing absorption of a writing beam. The thickness is adjusted to minimize reflection of the writing beam from the layer by causing the light reflected from the top surface of the layer to cancel the light reflected from the bottom surface of the layer. U.S. Patent No. 4,097,895 to Spong described a record in accordance with this teaching.

The reading mechanism employed in most prior art DRAW media involves an increase in reflectivity where the material is ablated. In other words, the information is in the form of bright spots on a dark background.

For ease of maintaining focus and tracking control, it is preferable to have the information written as dark spots on a bright background. Additionally, if it is desired to produce a medium which is readable by a standard laser videodisc player or a digital audio disc player, it is necessary that the background reflectivity of the medium be at least 80%. Such high background reflectivity requires the use of a relatively transparent information layer, which determines that the playback mechanism involve either a dispersion of the light by the ablated holes, or a phase cancellation due to path length differences between light traversing the unablated information layer and light traversing the open space in the ablated area. While diffraction effects caused by the small size of the ablated holes can modulate the reflected reading beam, the amplitude of the modulation is extremely low and insufficient for playback by a standard videodisc player or a digital audio disc player. On the other hand, phase cancellation can produce an almost complete extinction of the reflected light under ideal conditions of spot size versus hole size and film thickness versus wavelength.

Unfortunately, the film thickness required to produce a path length difference sufficient to yield adequate modulation of the reflected beam is in excess of 2000 Å (10 Å=1 nm) for the commonly used reading wavelengths. Layers of this thickness are undesirable due to the writing energy required to ablate them, the amount of debris produced during the ablation, and other factors.

Accordingly, a need exists for a DRAW medium capable of recording information in the form of dark spots on a bright background and which can achieve high playback contrast with a relatively thin information layer.

Summary of the invention

It is therefore an object of the present invention to provide an improved ablative DRAW medium which overcomes the drawbacks of the prior art.

It is a further object of the present invention to provide such a DRAW medium which records information in the form of dark spots on a bright background and which allows for a high modulation or playback contrast.

It is a still further object of the present invention to provide an improved playback mechanism for an optically readable disc which allows phase cancellation modulation of the reflected reading light using a relatively thin information layer.

These and other objects are achieved by the present invention as set out in Claim 1 through the use of a novel phase cancellation technique which takes advantage of the phase shift associated with the multiple reflections occurring at the surface boundaries of the information layer.

The light used in reading optical recording media is normally produced by a laser. Accordingly, the light is substantially monochromatic, meaning that all of the light is of the same color and therefore all of the electromagnetic light waves are of the same frequency. Additionally, the light is coherent, meaning that all of the light emitted by the laser is in phase as it leaves the laser. Since the light is both monochromatic and coherent, the beam of light emitted by the laser is in the form of plane waves. When this light is focused to a spot on the recording medium, the light is still in the form of plane waves, meaning that the light waves have a constant phase over the entire area of the focused spot.

As is readily known, when two or more light waves traverse the same space, the waves interfere with one another. If two light waves are approximately in phase with one another, they will "constructively" interfere resulting in a greater intensity of light than either of the waves taken individually. Alternatively, if the two waves are approximately 180° out of phase, "destructive" interference will result with a net intensity lower than that of the more intense one of the two waves.

This can be expressed more accurately by saying that each wave defines an electric field and the net field is the vector sum of the vectors representing the electric fields of all of the waves.

The prior art has taught that in order to achieve a 180° phase difference between the portion of light passing twice through the thickness t of an information layer having an index of refraction $n_2$ greater than one, and the portion of light passing twice through an equally thick layer of air having an index of refraction $n_1$ equal to one, the thickness t must equal the wavelength of the light in air divided by 4 $(n_2-n_1)$. Where the information layer has index of refraction of 1.5, the prior art specified a thickness equal to 1/2 of the wavelength of the light.

In the present invention the structure includes a second surface recording medium, and the unique advantages of the present invention are gained by adjusting the thickness of the information layer and supplying an inert transparent dielectric layer between the information layer and the reflective layer so that the light reflected by the substrate-air interface, the light reflected by the air-dielectric layer interface, and the light reflected from the dielectric-reflective layer interface combine to produce light which is almost 180° out of phase with light incident on the unablated area surrounding the hole and which was transmitted through the information layer and dielectric layer and reflected back through the dielectric layer and the information layer.

The composition of the substrate is not critical, but it is necessary that it be very transparent to any colors of light used in the writing or reading processes, that it be compatible with the light-responsive layer, and that the substrate and the light-responsive layer have approximately the same index of refraction. Additionally, if optimum information density is desired, it is necessary that at least the inner surface of the substrate be extremely smooth and relatively flat. While the optical properties of glass are well suited for use as the substrate, the physical properties of various plastics make them preferred over glass. Particularly well suited plastics for this purpose are polymethylmethacrylate (PMMA), ally diglycol carbonate, polyethylene terephthalate, polycarbonate, polysulphone, and PVC. Injection molded PMMA is the currently preferred substrate due to incrased flatness and optical consistency over other materials. However, any of the above materials and others are suitable if proper care is taken to assure that optical properties such as birefringence are held within acceptable limits.

The light-responsive recording layer must undergo some predictable physical or chemical change at a well determined threshold energy level. It is preferable that the material react only to the writing radiation and that the changed material be at least metastable. The change in the layer can be in the form of a decomposition, a change of state, a change of color, an optical density change, on a change in refractive index. In order to achieve high recording rates, the recording material must respond very rapidly, and the rate of physical change must not be limited by such factors as the diffusion of chemical reactants within the layer. While many such energy responsive materials are available, one preferred class of material is a thermally responsive material which is exothermic and thereby provides a significant portion of the activation energy itself, thereby increasing the writing efficiency of the medium. Some such thermally responsive compositions are discussed in U.S. Patent No. 4,139,853.

A mixture of a thermally decomposable material such as nitrocellulose and an appropriate write beam absorbing dye is one preferred composition for the light-responsive layer which is well adapted to forming closely controlled regions of altered refractive index which cause light modulation by phase cancellation. Other polymers are known which thermally react to form optically-dense light-absorbing areas. One such polymer is polyacrylonitrile which decomposes upon heating to form a light-absorbing amorphous carbon.

Dyes having a high absorption include: rhodamines such as Thodamin-B and Rhodamine-6G, xanthenes, for example Pyromine-B and Pyromine-G, acridines, for example Acriflavine, bisphenylmethane dyes, for example, Auramine and Michler's Hydrol Blue, triphenylethane dyes, for example, Malachit Green and Crystal Violet, as well as cyanine chromogenic dyes, for example monomethines, trimethines and pentamethines.

In order to assure uniform recording characteristics, the material in the light-responsive layer must be homogeneous and therefore must be kept from crystallizing. Furthermore, the layer must be of extremely uniform thickness and must not react with the substrate or the reflective overcoat. If the substrate is a plastic such as PMMA, the compatibility of the substrate material with the light responsive material and any solvents, dyes, or vehicles with which it is mixed becomes a major concern. The most common method for forming a uniform thin film of material on a substrate is to dissolve the material in an appropriate solvent to achieve a predetermined viscosity, and to deposit the solution on the substrate while the substrate is spinning at a predetermined rate. If the solvent reacts with the substrate in any way, irregularities in the layer will result.

All known prior art organic light-responsive materials or their solvents or binders react with PMMA to form unacceptable irregularities in the deposited layer. Since these organic materials are generally preferred over the inorganic materials, this has greatly limited the use of PMMA for a DRAW medium substrate and often required the use of fragile and heavy glass substrates or intermediate layers.

The overcoating material should be as reflective as possible and for reasons which will be discussed below, must be a good electrical conductor. This material should be selected based on the wave-lengths of light to be used for the writing and reading of the information. For visible wavelengths, a vapor deposited layer of aluminum in excess of 200 Å in thickness is satisfactory.

The control of the distribution of energy within the layer is accomplished by setting up a standing wave within the energy responsive layer by use of the electrically conductive reflecting layer. Because this reflective layer is highly conductive, the electric field intensity associated with the incoming writing beam of light will, ideally, have a node at the surface of the reflecting layer. The power present at any portion of the dielectric energy responsive layer is then proportional to the square of the sum of the electric fields from the incoming wave and the reflected wave. The amount of energy absorbed by the energy responsive material can be controlled by appropriately choosing the transmissivity of the material to the writing beam. The thickness and transmissitivity of the layer may be adjusted to approximately maximize the peak of absorbed energy at a particular position within the layer, or to distribute the absorbed energy so that approximately equal absorption occurs from the inner surface of the substrate to the surface of the reflecting layer. The peak intensity of the recording beam is then adjusted so that the ultimate energy absorption within the light responsive layer exceeds·the threshold level of the material over the desired depth of the layer. For most applications, it is preferable to alter substantially the entire thickness of the layer. This provides the maximum margin for intensity fluctuation, and also minimizes the change in volume of the reacting area with fluctuations in recording intensity. For temperature responsive layers, this also allows the beneficial use of the small amount of energy absorbed by the less than perfectly reflective conductive layer.

It should be appreciated that the structural characteristics of the medium of the present invention which contain the written information are completely different from the structural characteristics of all prior art mass-replicated, reflective, optical discs. The replicated prior art reflective discs have relied upon surface reliefs in the reflective layer to either scatter light incident upon the reflective layer or modulate the reflected light due to phase cancellation between portions of the beam reflected from adjacent reflecting surfaces spaced an odd quarter wavelength multiple from one another.

While such surface relief structures have been acceptable for mass produced videodisc replicas, no reliable and efficient means of forming such structural relief in a DRAW medium exists and no previous system of optically forming areas of altered density have allowed the formation of altered areas within a sealed structure and a structure of such high reflectivity.

In accordance with one aspect of the present invention, the light-responsive layer can include a dye which is highly absorptive of a writing beam of light having a relatively short wavelength, and relatively transmissive of light having a wavelength of 6328 Å as produced by a helium-neon gas laser or of a wavelength in the range of 7800 Å to 8500 Å such as produced by a diode laser.

Due to its high absorption of the writing beam, such a medium has an extremely high writing efficiency. Since many thermally responsive materials are available which are essentially transparent to red light, and since the dye is highly transmissive of the red light, the red light from a helium-neon or solid state laser used in a standard videodisc player or digital audio disc player will be transmitted very efficiently by the light-responsive recording layer. Such a structure allows for the production of a DRAW medium which has excellent recording efficiency and which has sufficient red light reflectivity and red light modulation to allow reading of information by a standard optical videodisc player or digital audio disc player. In other words, a DRAW medium can be produced which allows writing with a relatively low powered writing laser such as a 100 milliwatt argon ion laser and which satisfies the specifications of the IEC standard for optical videodiscs.

This unique structure allows for a writing beam absorption of up to 90% while simultaneously allowing a read beam reflectivity in excess of 80%. Clearly, if the same color of light is used for both writing and reading, such efficiencies are not possible and a trade-off exists between writing efficiency and reading efficiency. However, even in such circumstances, the medium of the present invention is superior to prior art mediums in that it is inherently highly efficient. That is, light of a particular wavelength is either absorbed by the light-responsive layer or is reflected back through the substrate. Very little loss occurs in the substrate and the reflective overcoating. Furthermore, increased efficiencies are provided by the present invention by controlling the energy distribution of the writing beam within the depth of the light-sensitive layer, to produce the maximum affect on the reading beam for a particular reading mechanism. Additionally, an essentially continuous gradation of writing efficiency versus reading efficiency is available, so that the writing versus reading efficiency of the medium can be custom tailored to fit any desired single wavelength DRAW system.

Further distinctions and advantages of the present invention will become apparent in connection with the following description of the preferred embodiments of the present invention.

Brief description of the drawings

Figure 1 is a perspective cutaway view of a standard videodisc;

Figure 2 is a cross sectional view of a prior art ablative recording media;

Figure 3 is a graph of contrast versus film thickness;

Figure 4 is a cutaway view of a first surface recording medium;

Figure 5 is a cutaway view of a second surface recording medium in accordance with the present invention;

Figure 6 is a cross sectional view of a double disc of an alternate embodiment; and

Figures 7A—D, Figure 8A—C, and Figure 9 are graphs showing energy distributions within the discs during the writing process.

Description of the preferred emodiments

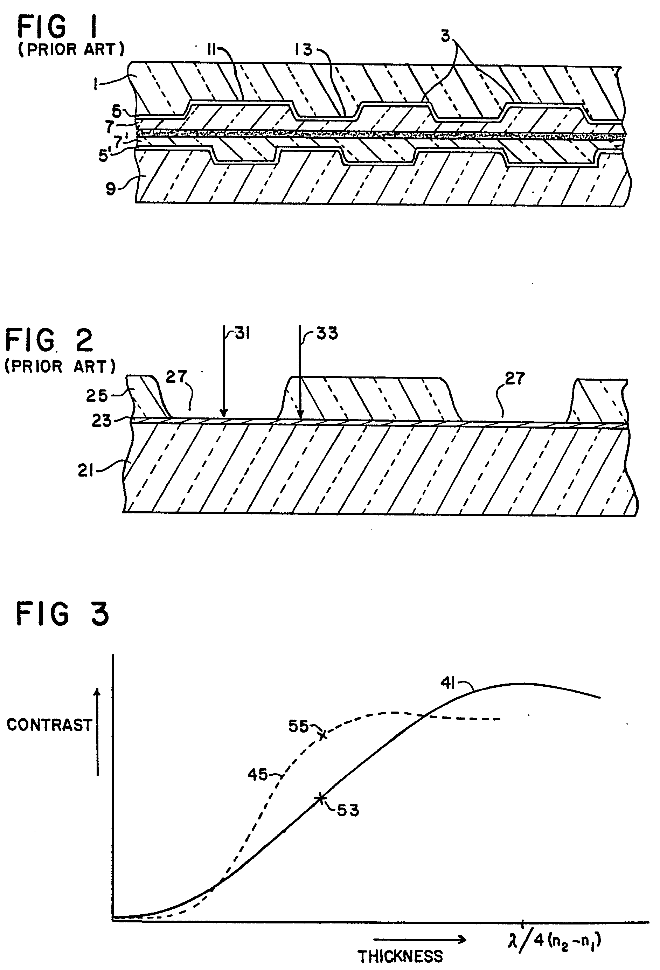

Referring to Figure 1, there is shown in a cutaway cross sectional view of a standard videodisc. This disc includes an upper substrate 1 having a plurality of information-representing pits 3 formed therein. These pits could be formed by injection molding or other similar mechanical processes. The entire inner surface of the substrate 1 is coated with a reflective layer 5. This reflective layer is typically formed of aluminium which is vapor deposited on the substrate 1 after the pits 3 have been formed.

A protective layer 7 may optionally be formed over the reflective layer protecting the layer from abrasion and chemical attack.

An identical substrate 9 having pits 3', aluminium layer 5', and protective layer 7' may be glued to the bottom side of the upper substrate.

The uniform aluminium layer 5 makes the standard videodisc highly reflective, making it possible to be accurately read with a relatively low intensity laser light source. For optimum modulation of the reflected reading beam, the pits 3 are formed with a depth corresponding to 1/4 wavelength of the reading beam of light in the substrate material. In this way, light reflected from the area 11 at the top of a pit will be 1/2 wavelength or 180° out of phase with light which travelled the extra distance and was reflected off of the area 13 surrounding the pit 3. It should be appreciated that this very efficient modulation mechanism is available only by providing two highly efficient reflective surfaces spaced an odd multiple of a quarter wavelength of the reading beam in the substrate material. While this can easily be accomplished by depositing the aluminium layer on a substrate containing appropriately formed pits, it is difficult to form such a structure with an optical writing process.

Figure 2 shows a prior art first surface ablative recording medium. This medium consists of a substrate 21 having a flat upper surface. The upper surface is coated with a layer 23 of highly reflective material, such as aluminium. A layer 25 of dielectric recording material, such as a mixture of nitrocellulose and a light absorbing dye is formed over the reflective layer. When a writing beam of light of sufficient intensity is focused on the information layer, the layer is ablated leaving a hole 27 exposing the upper surface of the reflective layer.

If the recording medium requires the information to be in the form of dark areas on a bright background, the information layer 25 is necessarily relatively transparent to the reading wavelength and must take advantage of phase cancellation for modulation of the reflected reading beam.

In accordance with the prior art teaching, the thickness of the information layer is adjusted so that the effective path length difference between a ray of light incident over the ablated area (represented by the arrow 31) and a ray of light incident on the information layer surrounding the ablated area (represented by the arrow 33) is approximately 1/4 wavelength, resulting in a phase difference after two passes of approximately 180°. Since both of these rays of light travel an equal actual distance and both are reflected by the reflective layer 23, the prior art teaches that the only difference in their phases will be due to the effective path length difference caused by the higher index of refraction encountered by the ray 33 while it traverses the information layer 25. The effective path length difference is equal to $2t(n_2-n_1)$ where $t$ is the thickness of the information layer, $n_2$ is the index of refraction of the information layer, and $n_1$ is the index of refraction of the ablated area. Since the ablated area is usually an open hole, its index of refraction is that of air, or approximately equal to 1.

Since the prior art teaches that maximum cancellation occurs where the effective path length difference in such a structure is equal to an odd integer multiple of one half of the wavelength, maximum contrast is expected when the film thickness=$\lambda/4$ $(n_2-n_1)$, where $\lambda$ is the wavelength of the reading light.

Figure 3 is a graph of contrast versus film thickness for a first surface recording medium such as shown in Figure 2. Both curves on this graph represent the contrast or reflected reading beam modulation achieved when the focused reading spot impinges on an ablated area on the disc of such a size that approximately half of the light returning from the medium has traversed the ablated area, and the other half of the light has traversed through the information layer around the ablated area.

The curve 41 represents the contrast level expected by the prior art from the sum of two separate plane waves such as would be formed by the two rays of light 31 and 33 of Figure 2.

The graph shows a well defined maximum contrast located where the two plane waves are approximately 180° out of phase. This phase relationship is produced at a thickness equal to the wavelength of the reading beam in light divided by four times the difference between the index of refraction in the information layer and the index of refraction in the ablated area. This point corresponds to the point where the vectors representing the electric fields of the two waves are pointed in opposite directions. Accordingly, the smaller amplitude electric field is completely subtracted from the larger amplitude electric field.

The curve 45 is a curve achievable through the addition of a plurality of plane waves, each wave being formed by a reflection from one of the surfaces of the information layer. It can be seen that the curve 45 achieves significant contrast at a much lower information layer thickness than the curve 41. This means that adequate reading contrast can be achieved with a much thinner information layer. As discussed above, a thinner information layer requires less energy for ablation. Also, since less debris is created during the writing process, greater signal-to-noise ratios are achievable.

While the curve 45 does not reach a level of contrast representative of exactly a 180° phase difference, the contrast level achieved is approximately 80% which is adequate to satisfy the standards of the International Electrotechnical Commission for optical videodiscs and corresponds to a phase difference between two equal intensity waves of about 130°.

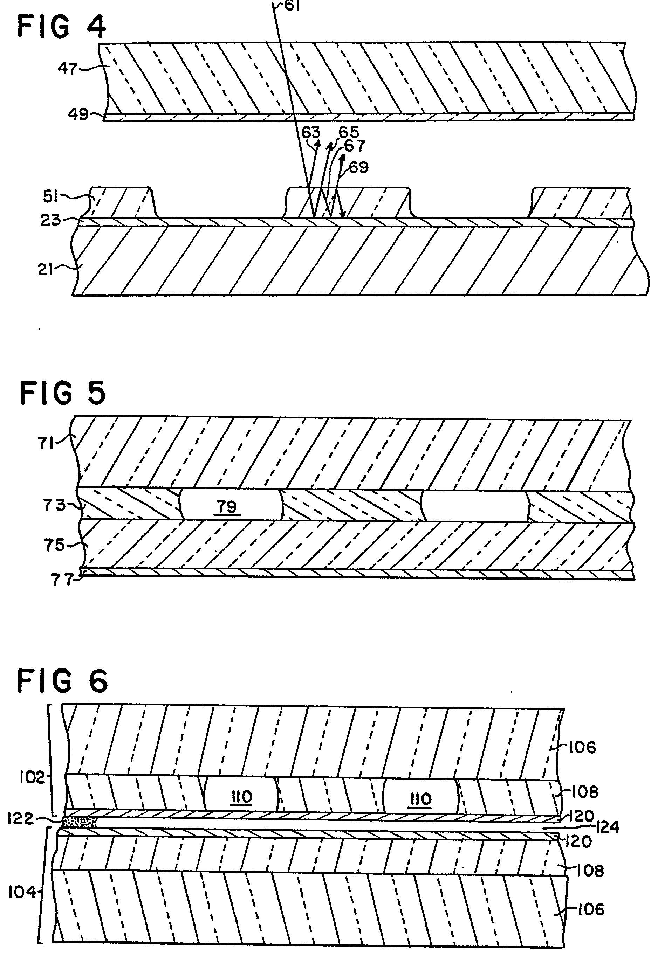

Figure 4 is a cross sectional view of an information recording medium.

The medium is similar to that shown in Figure 2 and includes a substrate 21 and a reflective layer 23. The substrate may be formed of any material having the appropriate mechanical characteristics, Polymethylmethacrylate (PMMA) being a presently preferred example. The reflective layer 23 may be formed of vapor deposited aluminium in excess of 200 Å in thickness.

An information layer 51 is coated on top of the reflective layer. In order to allow high reading background reflectivity, the material forming the layer 51 must be essentially transparent to the reading light. For writing purposes, however, the material must absorb a substantial portion of light of a writing wavelength. If writing and reading are done with two different wavelengths such as disclosed in U.S. Patent No. 4,225,873, entitled "Recording and Playback System" both of these requirements can be simultaneously satisfied. If for example the writing light is supplied by an Argon-Ion laser and the reading light is supplied by a Helium-Neon laser, a mixture of a blue light absorbing and red light transmitting dye with a transparent binder is a well suited material. Further, if the binder is exothermic, a portion of the writing energy is contributed by the material, and the writing efficiency is enhanced. U.S. Patent No.

4,139,853 discloses various such thermally responsive compositions, and the disclosure of this patent is hereby incorporated.

Nitrocellulose such as "Rs 1/2" grade from Hercules Inc. of Wilmington, Delaware is the currently preferred binder. A red dye, such as "Ceres Read CR3" (solvent red 18, Color Index, No. 21260) or "Astrazon Brilliant Red 4G 200" (both from Mobay Chemical Corp. of Hawthorne, N. J.), which is at least partially soluble in a suitable solvent such as ethylene glycol n-butyl ether or a mixture of ether and n-butyl alcohol, is a preferred dye. These dyes are strongly blue light absorbing and give good writing efficiency when mixed at a ratio of approximatley 1 part dye to 9 parts of the above-mentioned nitrocellulose by weight. Such a mixture has an index of refraction of approximately 1.6 at 6328 Å.

An extremely smooth layer of defined thickness can be formed by mixing the nitrocellulose and dye with the above-mentioned solvents and spin coating the solution on the substrate and reflective layer in accordance with known techniques. The mixing and coating processes are described in greater detail below.

The medium as shown in Figure 4 further includes a transparent window member 47 spaced above the information layer 51. The window member prevents dust from settling on the information layer and prevents any debris generated during the writing process from reaching the light beam focusing objective lens of the writing apparatus.

The window member may be formed from any transparent material having adequate optical properties such as low birefringence. PMMA is the preferred material.

The window member is preferably permanently bonded to the substrate 21, but must be spaced from the information layer 51. This can be done by placing spacers between the members, or by forming an airtight seal around the outer peripheries of the disc-shaped substrate and the disc-shaped window member and allowing an air path from the environment to the space between the members adjacent their centers so that they will be forced apart by differential pressure when the discs are rotated, as described in EP—A—0 139 354 entitled "Optical Disc Structure and Related Method of Manufacture".

In order to prevent unwanted losses of the reflected reading light, an antireflection coating 49 which is effective for the reading wavelength may be deposited on the inner surface of the window member. This coating may be formed of calcium fluoride or other chemicals in accordance with known methods. This coating has the added advantage of preventing sticking between the window member 47 and the information layer 51.

The primary difference between the recording medium of Figure 4 and the medium shown in Figure 2 is the thickness of the information layer 51. The layer 51 would provide only a very small contrast corresponding to the point 53 on the curve 41 of Figure 3. However, due to the additional reflections from both surfaces of the layer 51, the actual achievable contrast is much greater as represented by the point 55 on the line 45 of Figure 3.

The arrow 61 represents an incoming ray of the reading beam of light. When this ray impinges the upper surface of the information layer 51, a portion of the ray is reflected, resulting in the formation of reflected ray 63. The transmitted portion of ray 61 continues to the bottom surface of the information layer 51, where it is reflected by the reflective layer 23, resulting in reflected ray 65. When this ray reaches the upper surface of the information layer, a portion is reflected back into the information layer as re-reflected ray 67. The ray 67 will in turn be reflected by the reflective layer 23, resulting in a ray 69, a portion of which will be re-reflected by the upper surface of the layer 51. Theoretically, an infinite number of reflected rays will result from the incidence of a single ray. Naturally, some energy is lost in each reflection by the reflective layer, and the intensity of the light reflected by the upper surface of the information layer is relatively small compared to the intensity of light transmitted through the upper surface of the information layer. Accordingly, only the first several reflected rays have any measurable effect.

The effect of each reflected ray or portion of light is based upon the amplitude of its electric field and the relative phase of that electric field. These factors are described by the vector quantity representing the electric field of each reflected portion of the light. By summing together these vector quantities, the net amplitude and net phase of all of the light reflected from the ray 61 can be determined.

The amplitude of the electric field of the reflected portion of a ray impinging the upper surface of the information layer 51 is defined by the Fresnel reflection coefficient which is equal to the difference between the indices of refraction of the information layer and the air above that layer, divided by the sum of the indices of refraction.

The relative phase angle of the electric field of a ray exiting the upper surface of the information layer is determined by the number and type of reflections the ray has experienced, the total path length the ray has traversed through the information layer, and the index of refraction of the information layer. Accordingly, by appropriately adjusting the thickness and index of refraction of the recording layer, it is possible to adjust the relative amplitudes of the electric fields and their relative phases so that the phase of the electric field of the resultant light is significantly different from the phase of the electric field of the ray 65. Since the classical analysis of the prior art recording medium considers only the phase angle of the reflected ray 65, the actual total reflected light has a significantly different phase angle from that predicted by the classical analysis taught by the prior art.

By way of example, for a reading beam wavelength of 6328 Å, the prior art would predict a phase difference of approximately 90° for an information layer thickness of 1400 Å at an index of refraction of 1.6, yielding a maximum contrast of about 50%. By including all measurable additional reflections, the above-described analysis predicts an experimentally verifiable phase difference of approximately 130°, yielding a maximum contrast of about 80%.

Additionally, it has been found that for appropriate reading wavelengths and appropriate indices of refraction of the information recording layer, it is possible to greatly reduce the effect of thickness on the contrast. This is represented by the flatness of the curve 45 shown in Figure 3 beyond a certain minimum thickness. This allows the exact thickness of the layer to be determined based on writing efficiency considerations and also greatly relaxes the tolerance for variation in the information layer thickness.

For the 6328 Å wavelength of a Helium-Neon laser used in most videodisc players, and with an information layer having an index of refraction of approximately 1.6, acceptable playback contrast can be achieved with thicknesses in excess of 1300 Å. For minimizing the energy required for writing, and for minimizing the formation of debris, it is preferred to keep the information layer less than 1600 Å in thickness. The optimum range for the information layer has been found to be 1400 Å to 1500 Å.

It is possible to take advantage of the above-described phenomenon in a second surface type of recording medium such as shown in Figure 5. Such a medium, which is one embodiment of the present invention, includes a transparent substrate 71 with an information layer 73 coated on an inner surface thereof. A relatively inert and transparent dielectric layer 75 which is not affected by the writing process is subsequently formed on the bottom surface of the information layer, and a reflective layer 77 is formed on the bottom surface of the dielectric layer. Both reading and writing are performed through the transparent substrate 71. Since the information layer 73 is completely enclosed, any debris formed during the formation of an ablated area 79 is confined to that area, resulting in extremely high signal-to-noise ratios.

The index of refraction of the transparent substrate 71, the information layer 73, and the dielectric layer 75 are preferably approximately equal. PMMA is a presently preferred material for the substrate due to its favorable optical and mechanical qualities. Injection molded PMMA has an index of refraction of approximately 1.5. As described above, a mixture of approximately 90% nitrocellulose and approximately 10% organic dye has an index of refraction of approximately 1.6. This is a presently preferred material for the information layer 73.

Silicon monoxide, silicon dioxide, and cryolite are examples of the many suitable transparent materials for the dielectric layer which can be easily deposited and which have indices of refraction in the range of 1.5 to 1.7.

It should be noted that very little light will be reflected at the substrate-information layer boundary, and the information layer-dielectric layer boundary if these layers all have approximately the same index of refraction.

In order to take advantage of phase alteration due to multiple reflections, the thickness of the information layer 73 and the thickness of the dielectric layer 75 are adjusted so that the angle of the vector sum representing all light reflected by the substrate-air interface at an ablated area 79, from the air-dielectric boundary directly below, and from the dielectric-reflector boundary will be at least 130°, and preferably approximately 180°, relative to the angle of the vector sum representing all of the light reflected through the unablated areas around the area 79.

In order to minimize the writing energy and minimize the effects of the confined decomposition of the material, it is preferable to make the information layer as thin as permitted by the required level of contrast.

While the dielectric layer is not affected by the writing operation, its thickness does affect the writing efficiency because this layer and the substrate act as heat sinks during the writing process. In order to assure complete decomposition of the full thickness of the information layer, it is preferable to adjust the thickness of the dielectric layer so that antinodes or maximums of the standing wave formed by the writing beam occur near both boundaries of the information layer, if this can be done without unacceptably decreasing reading contrast.

For maximum read back contrast with the minimum information layer thickness, it has been found that the thickness of the dielectric layer 75 should be either a small fraction of the wavelength of the reading light, or approximately one half of the wavelength of the reading light in the dielectric material.

By way of example, using light with a wavelength of 6328 Å and an information layer and dielectric layer having indices of refraction of about 1.6, the thickness of the dielectric layer should be either in the range of 300—500 Å or in the range of 1800—2400 Å. Maximum contrast would then occur with an information layer about 1600 Å thick, but acceptable contrast will occur with layers as thin as 1000 Å.

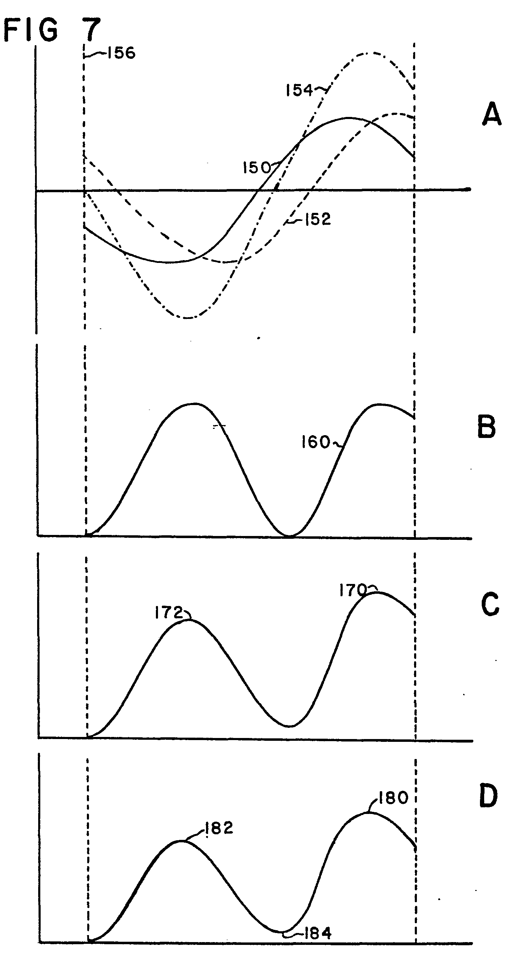

Figure 6 is a cross sectional view of a double sided DRAW disc in accordance with the present invention. The upper side 102 has been written on, and the lower side 104 is blank.

Each side of the disc includes a transparent substrate 106. The substrate is preferably transparent to any wavelength of light to be used during the reading or writing processes and is sufficiently thick to provide adequate support to the disc during handling and use. Since both the writing and reading beams of light are focused on the light responsive layer through the substrate, the substrate thickness must fall within the limits required by the selected objective lens parameters to allow adequate focus of the beams. A nominal thickness for the substrate 106 is 1.25 mm. Two half discs including substratss of this thickness can be glued together as shown in the figure to form a double disc in the range of 2.5 mm to 2.9 mm, in accordance with the IEC standard for optical videodiscs.

Although not shown, the substrate can be formed of a plurality of layers of different transparent materials to achieved desired qualities. For example, a layer of silicon oxide or silicon dioxide could be deposited on the substrate to prevent interaction between the light responsive coating solution and the substrate.

Layers 108 of light-responsive material are coated on the inner surfaces of the substrates 106. The materials forming these layers and the thicknesses of these layers are discussed in great detail below.

The light-responsive layer 108 of the upper disc half 102 includes a plurality of optically altered areas 110 sized and spaced to represent the recorded information. It is important to note that these areas 110 may selectively be caused to lie completely within the layer 108 and may or may not be contiguous with either surface of the layer 108.

Electrically conductive and light-reflecting overcoating layers 120 are deposited over the inner surfaces of the light-responsive layers 108. The reflective layers 120 may be formed by vapor deposited aluminum in excess of 200 Å in thickness, or any similar metallic substance such as gold, silver, or copper having good reflectivity of the wavelengths of light used in writing and reading, and being sufficiently electrically conductive to form a standing wave in the light-responsive layer.

Also not shown, optical spacers of a transparent material can be formed between the light-responsive layers and the reflective layers, as described above.

The two reflective overcoatings 120 are glued together using any convenient adhesive layer 122 which is compatible with the reflective overcoating material. For example, the adhesive may be a water soluble adhesive, a rubber based contact adhesive, or a thermally activated adhesive.

If the adhesive chosen is incompatible with the overcoating material, a protective intermediate layer (not shown) may first be applied to the two reflective overcoating layers prior to application of the adhesive to prevent the attack of the overcoating layers by the adhesive. However, since such layers are often thermally conductive, it is preferable to apply such overcoating layers and the glue only at the inner and outer boundaries of the discs where no information is recorded. This leaves a thin void 124 between the information carrying areas of the two disc halves.

It should be noted that the information carrying layer of the above-described medium is sealed and protected within the structure of the medium such that once the information has been written on the medium, it is relatively immune to damage or contamination from dust and the like.

Similarly, since the physical changes forming the optically altered areas 110 occur within the light-responsive layer 108, any solid or condensible by-products generated by chemical changes or phase changes in those areas are contained within the layer and cannot interfere with the subsequent recording of other areas or with previously recorded areas. If gaseous by-products are generated, the substrate or reflective layer is preferably chosen to have sufficient gas permeability to allow the gases to escape. Also, the reflective layer is made thick enough to assure that the reflective layer will not be damaged by the writing process.

Figure 7a is a representative graph showing the instantaneous electric field strength versus distance in a dielectric material adjacent the surface of an electrically conductive reflecting layer. The line 150 is the plot of the maximum instantaneous electric field strength of an incoming travelling wave. The line 152 is a plot of the instantaneous electric field intensity of the wave reflected from the electrically conductive reflective layer. The line 154 is a plot of the resultant electric field of the standing wave, the sum of the fields represented by the lines 150 and 152. Because the reflective layer is electrically conductive, the electric field strength will be nearly zero at the interface 156 between the electrically conductive layer and the dielectric layer.

Figure 7B is a plot 160 of the instantaneous power present within the dielectric material as a result of the incoming and reflected light. The power is proportional to the square of the electric field of the resultant wave (shown as 154 in Figure 7A).

Figure 7C is a similar plot of electrical power within a dielectric medium, but in this example the dielectric medium is partially absorptive of the light. Accordingly, a portion of the light is transformed to heat and the electrical power decreases with distance from the substrate surface. This is represented by the decreased energy levels of the first half cycle 170 of the resultant wave and the second half cycle 172 of the resultant wave.

Figure 7D is a plot of the temperature of the above-discussed light-absorptive dielectric layer as a result of the conversion of the light energy into heat energy. It should be noted that the temperature across the depth of the light absorptive dielectric layer varies in accordance with the electric power, and that by concentrating the electric power by establishing a standing wave within the dielectric material, it is possible to establish isolated areas 180 and 182 of higher temperature separated by an area 184 of lower temperature.

One aspect of the present invention takes advantage of this principal to control the depth and position of optically altered areas within a layer of material having a defined energy threshold. Clearly, if the temperature threshold of the dielectric material is above the temperature represented by the point 184 and below the temperature represented by the point 182, two separated areas within the layer will be altered. The boundaries of these areas will be approximately defined by the constant temperature surface ("isotherm"), the temperature of which is equal to the threshold temperature of the material. By adjusting the wavelength of the writing light beam, the thickness of the light absorbing dielectric layer, and the transmissivity of the layer, different temperature distribution patterns can be established within the layer to produce variously shaped altered areas.

If it is desired to alter all of the layer instead of portions within the layer, a higher absorption coefficient can be used to raise the minimum power points of the standing wave pattern, or a heavier exposure can be used to assure that the threshold level of the material will be exceeded at these minima.

In order to avoid excessive heat-sinking by the reflecting layer, the thickness of the layer should be kept to a minimum. Additionally, a wavelength selective reflective material such as gold could be used. Because of its relatively low reflectivity of blue light, such a layer would deminish the standing wave amplitude and would be heated by a blue writing beam. However, such a layer would provide good reflectivity of red reading light.

Since the standing wave power is relatively low near the reflective layer, very little energy is transferred to the layer at this point and the light absorbed here (and adjacent other minima of the standing wave) is to some extent wasted.

For at least this innermost minimum, it is possible to prevent some of this waste by substituting a non-absorbing or transparent material for a portion of the light absorbing layer. This is done by forming a light absorbing layer of reduced thickness and subsequently forming an intermediate layer of non-responsive or "inert" transparent material as discussed above.

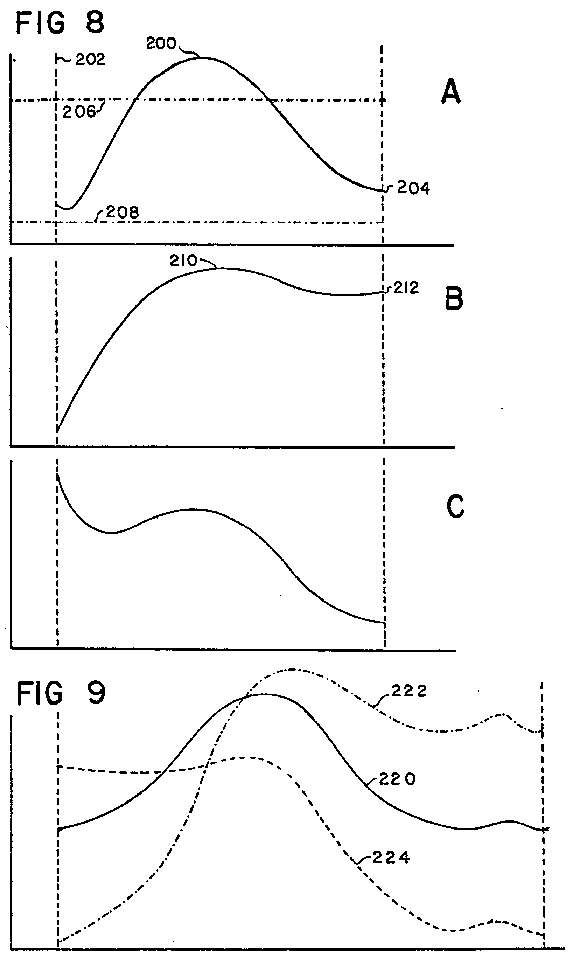

Figure 8A is a temperature plot for a single sided DRAW medium in accordance with the present invention. In this example, the wavelength of the writing beam of light in the dielectric light-responsive layer is approximately twice the thickness of the layer. Accordingly the quarter wavelength point of the standing wave which corresponds to the peak electric field strength is located approximately in the center of the layer and the highest temperature point 200 is also approximately in the center of the layer. Since the electric field strength is at a minimum adjacent the conductive layer, the temperature is also a minimum near the interface 202 between the light-responsive dielectric layer and the electrically conductive reflective layer, except for the small area heated by conduction from the reflective layer. The temperature has some intermediate value 204 at the outer boundary of the light-responsive dielectric layer. This intermediate value is in part determined by the heat-sinking action of the substrate.

The intensity of the writing beam may be adjusted so that the threshold temperature of the light-responsive material falls at a point 206 approximately half way between the temperatures 200 and 204. This results in the best recording signal-to-noise ratio for a partial depth altered area since the threshold temperature is located at the steepest portion of the curve between the points 200 and 204, meaning that the smallest and most linear size variation of the isotherm occurs for a given variation in the intensity of the writing beam. Alternatively, the intensity may be adjusted so that the threshold temperature falls at a point 208, below the points 200 and 204, resulting in the altering of the entire depth of the layer.

Figure 8B is a plot similar to Figure 8A, except that the dielectric material represented in Figure 8B is more highly absorptive of the writing beam than the dielectric material in Figure 8A. This increase in absorptivity (a decrease in transmissivity) results in more of the energy of the incoming beam being absorbed by the outer portions of the layer resulting in more heating near the substrate, less heating near the reflective layer, less heating of the reflective layer, and less difference between the peak temperature 210 within the layer and the temperature 212 at the outer boundary of the layer.

As the absorptivity of the dielectric material is increased further, less and less light reaches the reflective layer, and the standing wave effect is decreased. At some point, no energy will reach the reflective layer and no standing wave will be established. In such a case, the medium will resemble prior art DRAW media which have no reflective electrically conductive overcoating layers. Since the energy at a given depth of the layer decreases exponentially, the temperature at the outer surface of the layer will be far greater than the temperatures within the layer. Due to the slight thermal conductivity of the light responsive layer, it is possible in certain circumstances to supply sufficient energy to the outer surface of such a layer to cause the entire thickness of the layer to be heated above the threshold level. This technique was used in many prior art DRAW media. However, such a "brute force" method is wasteful of writing energy, greatly reduces the control over the size and shape of the altered area, and also leads to noise producing distortion or decomposition of the substrate due to the high temperatures of the light responsive layer adjacent the substrate.

Figure 8C is a plot similar to Figure 8A, except that the dielectric medium represented in Figure 8C is less absorptive of the writing beam than the dielectric material of Figure 8A. This decrease in absorptivity results in more of the energy of the incoming beam reaching the reflective layer, resulting in less heating near the substrate, more heating near the reflective layer, and more heating of the reflective layer.

Figure 9 is a temperature plot similar to Figures 8A—8C, but represents a dielectric layer having a thickness approximately three quarters of the wavelength of the writing beam of light in the layer. Making the dielectric layer approximately equal in thickness to an odd integer multiple of a quarter wavelength of the writing beam in the medium has certain advantages in increasing the writing efficiency under certain conditions.

The line 220 is a temperature plot with a medium value of absorptivity of the dielectric layer for the writing beam of light. the line 222 represents the temperature plot for a more highly absorptive dielectric material, and the line 224 represents the temperature plot for a less highly absorptive dielectric material. It will be noted that the change in the absorptivity of the dielectric material has a similar effect on the temperature distribution within the layer in this thicker embodiment to that in the thinner embodiment shown in Figures 8A, 8B and 8C.

It should be noted that the temperature plots of Figures 8A—8C and 9 represent the temperatures present approximately 10 nanoseconds after the end of an approximately 0.5 nanoseconds writing beam pulse. After the writing beam is turned off, the slight thermal conductivity. of the dielectric material will cause the temperature variations through the depth of the medium to average out somewhat over the next few nanoseconds. Accordingly, even if a small portion of the layer is not heated above the threshold temperature of the material, conductive transfer of heat will very shortly raise that temperature. This conduction can be accounted for and figured upon when determining the optimum peak intensity of the writing beam relative to the threshold energy level of. the dielectric material.

While the above-described optical recording system and method is applicable for use with mediums in many conceivable shapes and sizes, it is particularly applicable for recording on discs which are preferably of a size and configuration which conform with the standards for optically read videodiscs or the standards for digital audio discs. The standards for videodiscs were published by the International Electrotechnical Committee in 1982 and need not be reproduced herein.

These standards place many constraints on the design of a DRAW disc. Since the standards recite relatively narrow tolerances for the size, weight, and index of refraction of the discs, the choices of substrate material are narrowed to a few plastics. Of these, polymethylmethacrylate (PMMA) is a preferred choice due to its optical characteristics.

At the same time, the disc must have a relatively high reflectivity (75%—85% for a videodisc). This requires the use of a highly reflective overcoat material such as vapor deposited aluminum in excess of 200 Å. Such an overcoat is approximately 85% reflective of the reading beam. The losses in the reflective layer and the reflectivity specification require that the light-responsive layer be extremely transmissive to the red light. Since it is also desirable that the light-responsive layer be very absorptive of a separate writing wavelength, significant restrictions are placed on the material used in the light responsive layer. In order to allow the greatest possible separation between the wavelengths of the red reading beam and the writing beam, and in order to provide sufficient resolution of the writing beam to write information at the frequencies required by the disc specifications without requiring prohibitively expensive optics, a blue or blue-green writing beam is preferred. Such a beam can conveniently be provided by an argon ion laser, although other blue or blue-green lasers are also suitable, as are ultraviolet lasers.

In order to avoid internal reflection losses, the index of refraction of the light responsive layer must be relatively close to the index of refraction of the substrate. The index of refraction of injection molded PMMA is approximatley 1.5 Nitrocellulose has approximately the same index of refraction and is therefore suitable for use with PMMA substrates. Nitrocellulose is also essentially transparent to red light. However, nitrocellulose is also essentially transparent to blue light and therefore requires the addition of a blue-light-absorbing and red-light-transmitting dye. By comparing the relative absorption of various dyes at the writing and reading wavelengths, an appropriate dye can be selected.

The selection process is greatly complicated, however, by the requirement of compatibility between the substrate and all components of the light responsive layer, including any solvents or vehicles used when applying the light-responsive layer to the substrate.

In order to achieve adequate control of the thickness of the light-responsive layer, it is preferable to spin coat the material onto the substrate. The nature of spin coating requires the light-responsive material to be mixed with a solvent to an extremely uniform and well defined viscosity. The solvent must also have a vapor pressure which causes it to evaporate at a rate within a relatively narrow range. An evaporation rate outside of this range will result in surface irregularities drastically decreasing the signal-to-noise ratio of the medium.

Most of the common solvents which efficiently dissolve nitrocellulose also dissolve PMMA. Any attack of the PMMA substrate by the solvent will produce corresponding irregularities in the light-responsive layer. Accordingly, it is necessary to carefully choose and control the solvent to prevent damage to the substrate, while at the same time allowing proper spin coating of the light-responsive layer. Since the preferred light-responsive layer also includes a dye, the dye must be compatible with the PMMA substrate, the nitrocellulose, and the solvent.

It has been found that ethylene glycol n-butyl ether is a relatively efficient solvent for nitrocellulose which has an appropriate vapor pressure for spin coating. However, ethylene glycol n-butyl ether mildly attacks PMMA. It has been found that the addition of a minority quantity of n-butyl alcohol to the ethylene glycol n-butyl ether completely inhibits the attack on the PMMA without adversely affecting the vapor pressure or volatility of the solvent and without decreasing the solubility of nitrocellulose in the solvent.

The alcohol also has been found to minimize or eliminate the "edge effect" or excessing thinning of the spin-coated layer near the center of the disc where the solution is applied.

Previous dyes used to make nitrocellulose light-absorbing for use in recording have employed "oil" dyes such as oil orange. However, most such dyes are insoluble in ether and are therefore incompatible with the above-described system. Most water soluble dyes (commonly referred to as vat dyes) are soluble in ether and alcohol and are therefore compatible with the preferred solvent. Several vat dyes are available with appropriate absorption characteristics. A presently preferred dye for this purpose is known as "Atacryl Red 4G" available from Atlantic Chemical Co. A similar dye is "Astrazon Brilliant Red 4G 200" available from Mobay Chemicals.

When selecting dyes, it is important to consider the solubility characteristics of the dye in the nitrocellulose. If the dye is not highly soluble in the nitrocellulose, it will tend to crysallize as the solvent evaporates. This will result in a grainy structure with a very low signal-to-noise ratio and a very low frequency response.

The dye should also be selected based on its absolute absorption of the writing beam to assure that sufficient absorption will be provided by an amount of dye which can be reliably and efficiently mixed with the nitrocellulose and which will not cause an unacceptably high absorption of the reading beam.

The presently preferred solution for producing DRAW discs for use with optical videodisc players is produced by mixing a solution of one part n-butyl alcohol with one to nine parts of ethylene glycol n-butyl ether. Three parts of n-butyl ether yielding the preferred composition.

A nitrocellulose solution is then mixed with the solvent. The presently preferred nitrocellulose solution is a six percent solids content solution containing "RS 1/2" grade nitrocellulose available from Hercules Incorporated of Wilmington, Delaware. The desired quantity of dye is then added to the solution. The relative ratio between the dye and the nitrocellulose is adjusted to provide the desired absorption, and the relative amount of the solvent mixture is adjusted to provide the desired film thickness. The mixture is heated and allowed to sit overnight in order to stabilize in viscosity.

After the solution has stabilized, a previously injection molded and cleaned PMMA substrate disc is mounted on a variable speed turntable. The speed of the turntable and the viscosity of the solution are selected to produce a desired film thickness, in accordance with conventional spin coating practice.

A solution having a total solids content (dye and nitrocellulose) of 7.5—8.0% by weight and the remainder ethylene glycol n-butyl ether produces a coating approximately 2300—2500 Å thick when spin coated at 900—1000 rpm. The addition of n-butyl alcohol has only a minor effect on the thickness, requiring minor adjustment of the solids content of the solution if it is added in minority quantities, 6.0%+ to 7.5% solids being an appropriate range for a solution containing 25% n-butyl alcohol.

Depending upon the grade of nitrocellulose used and the amount of alcohol, a solution having between 5% and 10% solids may be required.

The solvent in the above-mentioned solution will evaporate in a matter of minutes on the spin coater, producing a light-responsive layer having a thickness uniformity of approximately ±50 Å.

This coated substrate is then placed in a vapor deposition chamber and coated with the transparent layer and reflective overcoating. As mentioned above, the preferred overcoating material is vapor deposited aluminum in excess of 200 Å in thickness. If desired, the aluminum can be deposited to a much greater thickness if deformation of the aluminum layer is not necessary.

If desired, two such four-layered discs can be glued back to back to form a composite two-sided DRAW disc. The two half-discs can be glued together using any conventional bonding agents which are compatible with the aluminum overcoats. Alternatively, the aluminum overcoats can first be protected with an intermediate coating to prevent a reaction between the aluminum and an incompatible bonding agent.

However, it is preferable to apply the bonding agent only at the inner and outer peripheries of the discs, so that the bonding agent will not interfere with the writing of information or result in irregular writing due to uneven heat-sinking of the reflective layer.

The thus completed two sided DRAW disc can be stored, handled, or shipped in the same manner as a conventional injection molded videodisc or digital audio disc without any ill effects.

In the specific embodiment of a DRAW disc which is playable on a standard video disc player or a DRAW disc which is playable on a standard digital audio disc player, the above-discussed dielectric material formed of an explosive material such as nitrocellulose and a blue-light-absorbing, red-light-transmitting dye is the presently preferred embodiment because this material reacts upon activation by the writing beam to form a clean void of closely controlled size and shape. As discussed above, if the absorptivity of the layer is properly chosen, and the peak intensity of the writing beam is properly adjusted, a relatively even temperature distribution can be established within the layer resulting in the uniform explosion of the entire thickness of the nitrocellulose-dye layer. The products of this explosion are primarily non-condensing gases which permeate through the substrate. If the reflective layer is much thicker than approximatley 200 Å, it will not be distorted by the explosion. This means that the thickness of the void resulting between the reflective layer and the substrate can be very closely controlled by controlling the thickness of the nitrocellulose-dye layer deposited upon the substrate when forming the disc.

Since the reading process for such a medium is based on phase cancellation of the reflected light which travelled twice through the void by the light which travelled twice through the surrounding nitrocellulose-dye layer, the thickness of the layer must be selected to result in approximately a one quarter wavelength path length difference for each passage of the light through the layer. As a first approximation, this path length difference will be obtained when the difference in index of refraction between the altered area and the unaltered area multiplied by the thickness of the layer equals one quarter of the wavelength of the reading beam of light.

The above approximation ignores the internal reflections of the reading beam which occur due to the index of refraction difference between the void and the substrate. These reflections cause an increase in the effective path length difference even without the use of the transparent inert layer described above. As a result of these reflections, nearly perfect phase cancellation occurs over a relatively broad range of thicknesses extending from approximately 2300 Å to approximately 2500 Å and acceptable cancellation occurs over the range from 2000 Å to 2700 Å.

Optimum recording efficiency for a 2300 Å to 2500 Å thick layer has been found to occur when the layer has an absorption co-efficient of between $2\times10^{-4}/Å$ to $6\times10^{-4}/Å$, where the absorption co-efficient is equal to $-1$/thickness times the natural log of the transmissivity.

With the above-mentioned range of thicknesses, this range of absorption results in the absorption of between 22% and 63% of the light traversing the layer, with 38% being absorbed under optimum conditions.

Such an absorption co-efficient can be achieved by mixing approximately six parts by weight of RS one half nitrocellulose with one part Atacryl RED 4G dye.

A 2400 Å thick layer of this material when used in the recording medium of the present invention including a reflective layer formed of 200 Å of aluminum, will result in approximately 90% absorbtion of a writing beam of light from an argon ion laser. Recordings in a standard video disc format can be made on such a medium using a laser power at the disc of less than 10 milliwatts.

## Claims

1. An optical information storage medium readable by light of a reading wavelength immediately after writing, comprising:
a transparent substrate (71),
a layer of predetermined thickness of writing-light-responsive material (73) on a first surface of said substrate, said material being a dielectric and having a threshold energy level above which it responds to the writing light and below which it does not respond; and

a reflective layer (77) of highly electrically conductive material on the opposite side of said light-responsive layer from said substrate, wherein said light-responsive material is substantially transparent to light of the reading wavelength and includes at lest one solid component which spontaneously and permanently chemically decomposes to form primarily gaseous components above said threshold level, and said reflective layer is substantially unaffected by said decomposition, whereby voids (79) are selectively formed in said light-responsive layer between said substrate and said reflective layer, the thickness of said light-responsive layer being selected such that said voids cause phase interference cancellation of light of a reading wavelength.

2. An optical information storage medium as claimed in Claim 1, wherein said substrate (71) is at least partially permeable to said gaseous components, whereby said void is formed without significant distortion of said substrate and said reflective layer.

3. An optical information storage medium as claimed in Claim 1, wherein the thickness of said light-responsive layer (73) and the absorptivity of said material to a particular color of light are such that an approximately equal amount of energy will be present at both surfaces of said layer, wherein the energy present in a unit of said material is the sum of conducted heat energy and absorbed light energy, the absorbed energy being the product of the absorptivity of that unit of said material multiplied by the sum of light energies present in that unit directed inward from the substrate and reflected outward from the reflective layer, each component of light energy present being a fraction of the incident energy determined by the absorptivity of the material, the path length through the material, and the efficiencies of any reflections.

4. An optical information storage medium as claimed in Claim 1, wherein said layer of light responsive material (73) is in the range of 700 Å to 2500 Å (10 Å=1 nm) in thickness and has an absorption coefficient for light of a wavelength in the range of 4800 Å to 5200 Å of between $2\times10^{-4}/Å$ and $6\times10^{-4}/Å$.

5. An optical information storage medium as claimed in Claim 1, further comprising a transparent inert layer (75) between said layer of light responisive material (73) and said reflective layer (77).

6. An optical information storage medium as claimed in Claim 1, wherein said substrate (71) includes a plurality of layers of transparent material.

7. An optical information storage medium as claimed in Claim 5, wherein said thickness of said layer of light responsive material (73) and the thickness of said transparent inert layer (75) are selected such that when a void is formed in the light responsive layer, the angle of the vector sum representing all light reflected by the substrate-void interface, from the void-inert layer interface, and from the inert layer-reflective layer boundary, will be at least 130°, and preferably 180°, relative to the angle of the vector sum representing all of the light reflected through the area around the void.

8. An optical information storage medium as claimed in Claim 4 wherein said layer of light-responsive material (73) contains information—representing voids (79) formed by the decomposition of said at least one solid component, said voids causing phase cancellation of light of a wavelength in the range of 6300 Å to 7800 Å (10 Å=1 nm).

9. A system for recording information such that the information is immediately readable, said system comprising:

writing means for producing a focused write beam of laser light of a controlled peak intensity and a particular wavelength and modulated in intensity in accordance with the information to be recorded;

a disc having a substrate (71) transparent to said particular wavelength of light and through which said light is directed, said disc further including a first layer (73) of dielectric material partially absorptive of and responsive to light of said particular wavelength, said dielectric material having a threshold energy level for light of said particular wavelength, said layer of dielectric material being approximately the thickness of an odd integer multiple of one quarter wavelength of light of said particular wavelength in the material, said disc further including a reflective layer (77) on the opposite side of said first layer (73) from said substrate (71), said reflective layer (77) being very electrically conductive and highly reflective of light of said particular wavelength such that a standing wave of light energy is established in said first layer (73), said dielectric material being substantially transparent to light of a reading wavelength and including at least one solid component which spontaneously and permanently chemically decomposes to form primarily gaseous components in response to said write beam, and said reflective layer (77) is substantially unaffected by said decomposition, whereby voids (79) are selectively formed in said dielectric layer (73); and

means for moving said focused beam relative to said disc,

said peak intensity of said laser beam and the absorptivity of said dielectric material being selected such that the threshold energy level of said dielectric material in said first layer is exceeded substantially equally from said substrate (71) to said reflective layer (77), whereby the depth of said voids is controlled to cause phase interference cancellation of light of a reading wavelength, wherein the energy present in a unit of said material is the sum of conducted heat energy and absorbed light energy, the absorbed energy being the product of the absorptivity of that unit of said material multiplied by the sum of light energies present in that unit directed inward from the substrate and reflected outward from the reflective layer, each component of light energy present being a fraction of the incident energy of the write beam determined by the absorptivity of the material, the path length through the material, and the efficiencies of any reflections.

10. A system as claimed in Claim 9, recording information which is immediately readable in accordance with the IEC standard for optical videodiscs, wherein said disc is between 75% and 85% reflective of light having a wavelength of 6328 Å (10 Å=1 nm).

**Patentansprüche**

1. Optisches Informationsspeichermedium, das unmittelbar nach den Einschreiben mittels Licht einer Lesewellenlänge lesbar ist, umfassend:

ein lichtdurchlässiges Substrat (71),

eine eine vorbestimmte Dicke aufweisende Schicht eines für Einschreiblicht empfindlichen Materials (73) auf einer ersten Oberfläche des Substrats, wobei dieses Material ein Dielektrikum ist und einen Grenzenergiepegel hat, oberhalb dessen es für das Schreiblicht empfindlich ist und unterhalb dessen es unempfindlich ist; und

eine Reflexionsschicht (77) aus elektrisch hochleitfähigem Material auf der der lichtempfindlichen Schicht abgewandten Seite des Substrats, wobei das lichtempfindliche Material für Licht der Lesewellenlänge im wesentlichen durchlässig ist und wenigstens eine Festkomponente aufweist, die oberhalb des Grenzpegels spontan und permanent chemisch zerfällt unter Bildung von primär gasförmigen Komponenten, und wobei die Reflexionsschicht durch diesen Zerfall im wesentlichen unbeeinflußt bleibt, so daß in der lichtempfindlichen Schicht zwischen dem Substrat und der Reflexionsschicht selektiv Leerstellen (79) gebildet werden, wobei die Dicke der lichtempfindlichen Schicht so gewahlt ist, daß die Leerstellen eine Phaseninterferenzaufhebung von Licht einer Lesewellenlänge bewirken.

2. Optisches Informationsspeichermedium nach Anspruch 1, wobei das Substrat (71) für die gasförmigen Komponenten zumindest teilweise durchlässig ist, so daß die Leerstelle ohne merkliche Verformung des Substrats und der Reflexionsschicht gebildet wird.

3. Optisches Informationsspeichermedium nach Anspruch 1, wobei die Dicke der lichtempfindlichen Schicht (73) und das Absorptionsvermögen des Materials für eine bestimmte Lichtfarbe derart sind, daß an beiden Oberflächen der Schicht eine etwa gleiche Energiemenge vorhanden ist, wobei die in einer Materialeinheit vorhandene energie die Summe aus geleiteter Wärmeenergie und absorbierter Lichtenergie ist und die absorbierte Energie das Produkt des Absorptionsvermögens dieser Materialeinheit, multipliziert mit der Summe der in dieser Einheit vorhandenen, vom Substrat nach innen gerichteten und von der Reflexionsschicht nach außen reflektierten Lichtenergien ist, wobei jede Komponente vorhandener Lichtenergie ein Bruchteil der auftreffenden Energie, bestimmt durch das Absorptionsvermögen des Materials, die Bahnlänge durch das Material und die Wirkungsgrade aller Reflexionen, ist.

4. Optisches Informationsspeichermedium nach Anspruch 1, wobei die Dicke der Schicht aus lichtempfindlichem Material (73) im Bereich von 700—2500 Å (10 Å=1 nm) liegt und die Schicht für Licht einer Wellenlänge im Bereich von 4800—5200 Å einen Absorptionskoeffizienten zwischen $2\times10^{-4}$/Å und $6\times10^{-4}$/Å hat.

5. Optisches Informationsspeichermedium nach Anspruch 1, ferner umfassend eine lichtdurchlässige inerte Schicht (75) zwischen der lichtempfindlichem Materialschicht (73) und der Reflexionsschicht (77).

6. Optisches Informationsspeichermedium nach Anspruch 1, wobei das Substrat (71) mehrere Schichten aus lichtdurchlässigem Material aufweist.

7. Optisches Informationsspeichermedium nach Anspruch 5, wobei die Dicke der lichtempfindlichen Materialschicht (73) und die Dicke der lichtdurchlässigen inerten Schicht (75) so gewählt sind, daß bei Bildung einer Leerstelle in der lichtempfindlichen Schicht der Winkel der Vektorsumme, die das gesamte von der Grenzfläche zwischen Substrat und Leerstelle, von der Grenzfläche zwischen Leerstelle und inerter Schicht sowie von der Grenze zwischen inerter Schicht und Reflexionsshicht reflektierte Licht darstellt, wenigstens 130° und bevorzugt 180° beträgt relativ zu dem Winkel der Vektorsumme, die das gesamte durch den Bereich um die Leerstelle reflektierte Licht darstellt.

8. Optisches Informationsspeichermedium nach Anspruch 4, wobei die lichtempfindliche Materialschicht (73) Informationen darstellende Leerstellen (79) enthält, die durch den Zerfall der wenigstens einen Festkomponente gebildet sind, wobei diese Leerstellen eine Phasenaufhebung von Licht einer Wellenlänge im Bereich von 6300—7800 Å (10 Å=1 nm) bewirken.

9. Einrichtung zum Aufzeichnen von Informationen derart, daß diesse sofort lesbar sind, wobei die Einrichtung umfaßt:

Einschreibmittel zur Erzeugung eines fokussierten Einschreib-Laserlichtstrahls einer geregelten Spitzenstärke und einer bestimmten Wellenlänge, dessen Intensität nach Maßgabe der aufzuzeichnenden Informationen modulierbar ist;

eine Platte mit einem Substrat (71), das für die bestimmte Lichtwellenlänge durchlässig ist und durch die dieses Licht gerichtet wird, wobei die Platte fener eine erste Schicht (73) aus dielektrischem Material aufweist, die für Licht der bestimmten Wellenlänge teilweise absorptionsfähig und dafür empfindlich ist, wobei das dielektrische Material einen Grenzenergiepegel für Licht der bestimmten Wellenlänge hat und die Dicke der dielektrischen Materialschicht annähernd eine ungerades ganzzahliges Vielfaches einer Viertelwellenlänge von Licht der bestimmten Wellenlänge in dem Material ist, wobei die Platte ferner eine Reflexionsschicht (77) auf der der ersten Schicht (73) abgewandten Seite des Substrats (71) aufweist und die Reflexionsschicht (77) elektrisch hochleitfähig und hochreflektiv für Licht der bestimmten Wellenlänge ist, so daß in der ersten Schicht (73) eine stehende Lichtenergiewelle ausgebildet wird, wobei das dielektrische Material für Licht einer Lesewellenlänge im wesentlichen durchlässig ist und wenigstens eine Festkomponente aufweist, die aufgrund des Einschreibstrahls spontan und permanent chemisch zerfällt unter Bildung von primär gasförmigen Komponente, und wobei die Reflexionsschicht (77) durch diesen Zerfall im wesentlichen unbeeinflußt bleibt, so daß in der dielektrischen Schicht (73) selektiv Leerstellen (79) gebildet werden; und

Mittel zur Verschiebung des fokussierten Strahls relativ zu der Platte,

wobei die Spitzenstärke des Laserstrahls und das Absorptionsvermögen des dielektrischen Material so gewählt sind, daß der Grenzenergiepiegel des dielektrischen Materials in der ersten Schicht von dem Substrat (71) zu der Reflexionsschicht (77) im wesentlichen gleich überschritten wird, so daß die Tiefe der Leerstellen kontrolliert ist, um eine Phaseninterferenzaufhebung von Licht einer Lesewellenlänge zu bewirken, wobei die in einer Materialeinheit vorhandene Energie die Summe aus geleiteter Wärmeenergie und absorbierter Lichtenergie ist und die absorbierte Energie das Produkt aus dem Absorptionsvermögen dieser Materialeinheit, multipliziert mit der Summe der in dieser Einheit vorhandenen, vom Substrat nach innen gerichteten und von der Reflexionsschicht nach außen reflektierten Lichtenergien ist, wobei jede Komponente der vorhandenen Lichtenergie ein Bruchteil der auftreffenden Energie des Einschreibstrahls, bestimmt durch das Absorptionsvermögen des Materials, die Bahnlänge durch das Material und die Wirkungsgrade aller Reflexionen, ist.

10. Einrichtung nach Anspruch 9, zum Aufzeichnen von Informationen, die sofort lesbar sind, nach Maßgabe der IEC-Norm für optische Bildplatten, wobei die Platte ein Reflexionsvermögen zwischen 75% und 85% für Licht einer Wellenlänge von 6328 Å (10 Å=1 nm) hat.

**Revendications**

1. Un milieu optique de mémorisation d'information lisible par une limière d'une longueur d'onde de lecture immédiatement après l'écriture, comprenant:

un substrat transparent (71),

une couche d'épaisseur déterminée au préalable d'une matière (73) sensible à la lumière d'écriture sur une première surface dudit substrat, ladite matière étant un diélectrique et possédant un niveau d'énergie de seuil au-dessus duquel elle répond à la lumière d'écriture et au-dessous duquel elle ne répond pas; et

une couche réfléchissant 677) de matière fortement conductrice de l'électricité sur la face opposée de ladite couche sensible à la lumière dudit substrat, dans lequel ladite matière sensible à la lumière est sensiblement transparente à une lumière de longueur d'onde de lecture et comprend au moins un composant solide qui se décompose chimiquement spontanément et de façon permanente pour former des composants principalement gazeux au-dessus dudit niveau de seuil, et dans lequel ladite couche réfléchissante est sensiblement non affectée par ladite décomposition, grâce à quoi des vides sont formés sélectivement dans ladite couche sensible à la lumière entre ledit substrat et ladite couche réfléchissante, l'épaisseur de ladite couche sensible à la lumière étant choisie de telle façon que lesdits vides provoquent une annulation par interférence de phase de la lumière d'une longueur d'onde de lecture.

2. Un milieu optique de mémorisation d'informations selon la revendication 1, dans lequel ledit substrat (71) est au moins partiellement perméable auxdits composants gazeux grâce à quoi ledit vide est formé sans distorsion significative dudit substrat et de ladite couche réfléchissante.

3. Un milieu optique de mémorisation d'informations selon la revendication 1, dans lequel l'épaisseur de ladite couche (73) sensible à la lumière et l'absorptivité de ladite matière à une couleur particulière de lumière sont telles qu'une quantité d'énergie approximativement égale est présente sur les deux surfaces de ladite couche, dans lequel l'énergie présente dans une unité de ladite matière est la somme de l'énergie thermique conduite et de l'énergie lumineuse absorbée, l'énergie absorbée étant le produit de l'absorptivité de cette unité de ladite matière multipliée par la somme des énergies lumineuses présentes dans cette unité dirigées vers l'intérieur depuis le substrat et réfléchies vers l'extérieur depuis la couche réfléchissante, chaque composant de l'énergie lumineuse présente étant une fraction de l'énergie incidente déterminée par l'absorptivité de la matière, la longueur du trajet à travers la matière et les efficacités de toutes les réflexions.

4. Un milieu optique de mémorisation d'informations selon la revendication 1, dans lequel ladite couche de matière sensible à la lumière (73) est d'une épaisseur située dans la plage de 70 à 250 nm et présente un coefficient d'absorption à la lumière d'une longueur d'onde dans la plage de 480 à 520 nm comprise entre $2\times10^{-5}$/nm et $6\times10^{-5}$/nm.

5. Un milieu optique de mémorisation d'informations selon la revendication 1, comprenant en outre une couche inerte transparente (75) entre ladite couche de matière sensible à la lumière (73) et ladite couche réfléchissante (77).

6. Un milieu optique de mémorisation d'informations selon la revendication 1, dans lequel ledit substrat (71) comprend plusieurs couches de matière transparente.

7. Un milieu optique de mémorisation d'informations selon la revendication 5, dans lequel ladite épaisseur de ladite couche de matière (73) sensible à la lumière et l'épaisseur de ladite couche inerte transparente (75) sont choisies de telle façon que lorsqu'un vide est formé dans la couche sensible à la lumière, l'angle du vecteur somme représentant toute la lumière réfléchie par l'interface substrat-vide depuis l'interface vide-couche inerte, et depuis la limite couche inerte-couche réfléchissante, est d'au moins 130°, et de préférence 180°, par rapport à l'angle du vecteur somme représentant toute la lumière réfléchie à travers la zone autour du vide.

8. Un milieu optique de mémorisation d'informations selon la revendication 4, dans lequel ladite couche de matière (73) sensible à la lumière contient des vides (79) représentant une information formés par la décomposition dudit composant solide au moins unique, lesdits vides provoquant l'annulation de phase de la lumière d'une longueur d'onde située dans la plage de 630 à 780 nm.

9. Un système d'enregistrement d'informations tel que l'information soit immédiatement lisible, ledit système comprenant:

des moyens d'écriture our produire un faisceau d'écriture focalisée de lumière laser d'une intensité de pic commandée et d'une longueur d'onde particulière, et modulé en intensité selon l'information à enregistrer;

un disque possédant un substrat transparent (71) à ladite longueur d'onde particulière de la lumière et à travers lequel ladite lumière est dirigée, le dit disque comportant de plus une première couche (73) de matière diélectrique partiellement absorbante d'une lumière de ladite longueur d'onde particulière et sensible à celle-ci, ladite matière diélectrique possédant un niveau d'énergie de seuil pour une lumière de ladite longueur d'onde particulière, ladite couche de matière diélectrique étant approximativement de l'épaisseur d'un multiple entier impair d'un quart de longueur d'onde de la lumière de ladite longueur d'onde particulière dans la matière, ledit disque comprenant de plus une couche réfléchissante (77) sur le côté opposé de ladite première couche (73) depuis ledit substrat (71), ladite couche réfléchissante (77) étant fortement conductrice de l'électricité et hautement réfléchissante de la lumière de ladite longueur d'onde particulière de telle façon qu'une onde stationnaire d'énergie lumineuse soit établie dans ladite première couche (73), ladite matière diélectrique étant sensiblement transparente à une lumière d'une longueur d'onde de lecture et comprenant au moins un composant solide qui se décompose chimiquement spontanément et de façon permanente pour former principalement des composants gazeux en réponse auxdits faisceaux d'écriture, et que ladite couche réfléchissante (77) soit sensiblement non affectée par ladite décomposition, grâce à quoi des vides (79) sont formés sélectivement dans ladite couche diélectrique (73); et

des moyens pour déplacer ledit faisceau focalisé par rapport audit disque

ladite intensité de pic dudit faisceau laser et l'absorptivité de ladite matière diélectrique étant choisies de telle façon que le niveau d'énergie de seuil de ladite matière diélectrique dans ladite première couche soit dépassée de façon sensiblement égale depuis ledit substrat (71) vers ladite couche réfléchissante (77), de sorte que l'épaisseur desdits vides soit commandée pour provoquer l'annulation par interférence de phase de la lumière d'une longeuer d'onde de lecture, dans lequel l'énergie présente dans une unité de ladite matière est la somme de l'énergie thermique conduite et de l'énergie lumineuse absorbée, l'énergie absorbée étant le produit de l'absorptivité de cette unité de ladite matière multipliée par la somme des énergies lumineuses présentes dans cette unité dirigées vers l'intérieur depuis le substrat et réfléchies vers l'extérieur depuis la couche réfléchissante, chaque composante d'énergie lumineuse présente étant une fraction de l'énergie incidente du faisceau d'écriture déterminée par l'absorptivité de la matière, la longueur de trajet à travers la matière, et les efficacités de toutes les réflexions.

10. Un système selon la revendication 9, enregistrant l'information qui est immédiatement lisible conformément au standard IEC de vidéo disques optiques dans lequel le disque réfléchit entre 75% et 85% d'une lumière d'une longueur d'onde de 632,8 nm.

EP 0 130 026 B1

FIG 1
(PRIOR ART)

FIG 2
(PRIOR ART)

FIG 3

CONTRAST

THICKNESS

$\lambda/4(n_2-n_1)$

1

FIG 4

FIG 5

FIG 6

2

FIG 7

EP 0 130 026 B1

## FIG 8

A

B

C

## FIG 9